# EUROPEAN PATENT SPECIFICATION

(11) **EP 3 173 289 B1**
(45) Date of publication and mention of the grant of the patent: **19.09.2018**
(21) Application number: 15465559.1
(22) Date of filing: 26.11.2015
(51) Int. Cl.: B60R 11/04

(54) **CAMERA BRACKET WITH METAL WIRE SPRING**
KAMERAHALTERUNG MIT METALLDRAHTFEDER
SUPPORT DE CAMÉRA AVEC RESSORT EN FIL MÉTALLIQUE

(43) Date of publication of application: 31.05.2017
(73) Proprietor: Continental Automotive GmbH, 30165 Hannover (DE)
(72) Inventor: Lazar, Adrian-Catalin, 300289 Timisoara (RO); Vuletici, Goran, 327367 Campia, Jud. Caras-Severin (RO)
(74) Representative: Reuter, Andreas

(56) References cited:
- WO-A1-2014/141357
- DE-A1-102009 011 614
- DE-B3-102012 011 596

## Description

This application relates to a camera bracket, and claims a bracket unit for holding a vehicle sensor as well as a method for a bracket unit to fasten onto a vehicle sensor.

A camera is usually mounted onto a windshield using one bracket. Elastic elements and plate or leaf springs are used for attaching the camera onto the bracket. An example of the elastic elements is a snapper. The plate springs are produced from plastic or metal and they include an elongated body with an rectangular cross-section. One or more parts of the body has an arc shape.

US20110233248 A1 discloses a carrier device for attaching to a windshield of a motor vehicle. The carrier device has a carrier plate. The carrier plate or segments of the carrier plate are made of plastic and it is intended for carrying a camera or a sensor. One side of the carrier plate is permeated with a glass additive material for attaching to the windshield of the vehicle.

US20120207461 A1 discloses a camera of a vehicle. The camera has a case and a lens and it is located inside the vehicle. The lens is exposed at a top face of the case, wherein the top face is opposed to a windshield of the vehicle. The top face has an angular shape bent at a ridge line that passes through the top face. The lens is positioned in the vicinity of the ridge line.

DE 102009011614 A1 shows a sensor assembly for a motor vehicle with a holder frame for a sensor housing attached to the windscreen. This sensor assembly has a double twin-leg wire spring to press the housing against the windscreen within a clip-shaped holder. With respect to claim 1, this document discloses
a bracket unit for holding a vehicle sensor, the bracket unit comprising a bracket and a metal wire spring, the bracket comprising - a bracket plate, - at least one bracket holder part, - at least one bracket hook part, and - at least one bracket latch part, the metal wire spring comprising an elongated body with an essentially circular cross-section, the body comprising - at least one spring hinge part, the spring hinge part being rotatably attached to the bracket holder part, - at least one spring bar part, and - at least one spring latch part, wherein the bracket unit provides a vehicle sensor receiving position and a vehicle sensor fastening position.
With respect to claim 12, this document discloses
a method for a bracket unit to fasten onto a vehicle sensor, the bracket unit comprising a bracket and a metal wire spring, the method comprising a vehicle sensor receiving step and a vehicle sensor fastening step, wherein - the vehicle sensor fastening step comprises the at least one spring latch part and the at least one bracket latch part fastening onto the vehicle sensor, wherein the metal wire spring is positioned in a urged state.

It is an object of this application to provide an improved camera bracket.

The application provides an improved bracket unit for holding and fastening onto a sensor of a vehicle.

The vehicle is used for transporting people or goods. The sensor is used for measuring a physical parameter, such as temperature, light, or movement. One side of the bracket unit is adapted for attached to an interior part of the vehicle. The bracket unit is also adapted for fastening onto the vehicle sensor.

With reference to the bracket unit, it comprises two parts, namely a bracket and a metal wire spring.

The bracket includes several integrally connected parts. The integrally connected parts can be formed, as an example, during plastic extrusion process. These integrally connected parts include a bracket plate, one or more bracket holder parts, one or more bracket hook parts, and one or more bracket latch parts. The bracket plate has two opposing major surfaces. The bracket holder parts, the bracket hook parts, and the bracket latch parts are integrally connected to one major side of the bracket plate.

Regarding the metal wire spring, it includes an elongated body with an essentially circular cross-section, such as circular or oval. The elongated body includes several integrally connected parts, namely one or more spring hinge parts, one or more spring bar parts, and one or more spring latch parts. The spring hinge part is rotatably attached to the corresponding bracket holder part. This attachment allows the metal wire spring to rotate about the bracket holder part.

The metal wire spring and the bracket are adapted such that the spring bar parts correspond to or complement the bracket hook parts and the spring latch parts correspond to the bracket latch parts.

The spring latch part and the corresponding bracket latch part have recesses, which are provided for receiving and fastening onto a respective projection of the vehicle sensor.

The bracket unit provides a vehicle sensor receiving position and a vehicle sensor fastening position.

In the vehicle sensor receiving position, the metal wire spring is rotated such that the spring bar part is positioned between the corresponding bracket hook part and the bracket plate. The bracket hook part then blocks the corresponding spring bar part such that the metal wire spring can only rotate about the spring hinge part or about the bracket holder part by a few degrees.

The spring latch part and the corresponding bracket latch part are then positioned for receiving a corresponding projection of the vehicle sensor. The metal wire spring is also positioned in a relaxed or uncompressed state.

In the vehicle sensor fastening position, a camera is inserted into the bracket unit such that the spring latch part and the corresponding bracket latch part are fastened onto the corresponding projection of the vehicle sensor.

The metal wire spring can bend or flex by a little bit for a short while for the projection to be inserted between the corresponding spring latch part and the corresponding bracket latch part. The corresponding spring latch part and the corresponding bracket latch part then enclose and are fastened onto the camera projection. The metal wire spring is then positioned in an urged or compressed state.

In effect, this fastening of the camera projection acts to fix the camera with respect to the bracket unit.

The sensor bracket unit provides several benefits.

This sensor bracket unit can be producing using only a few components, namely a metal wire spring and a bracket, which provides a snug fit with a vehicle sensor.

This sensor bracket unit can also be assembled easily on manufacturing lines.

The metal wire spring of the bracket unit can also be produced easily and can be shaped easily while maintaining its physical properties over time, even over high temperatures in a vehicle.

This is different from other camera brackets that use plate springs, which are produced using metal or plastic.

The metal plate springs require high development and high production costs. The metal plate springs are not available off-the-shelf because no agreed standards exist for these plate springs. They are hence produced using customized tooling, which is expensive. Moreover, each camera bracket can have three or four metal plate springs, which lead to longer time for assembling a bracket unit of the camera bracket.

Referring to the plastic plate springs, they require complex tooling to produce, which increases cost of producing these plate springs. Elasticity of these plastic plate springs also tends to deteriorate at high temperatures and to deteriorate over time.

The bracket unit can have additional features.

In the vehicle sensor fastening position, the insertion of the sensor into the bracket unit can cause the bracket hook part to be positioned between the corresponding spring bar part and the bracket plate. The metal wire spring is then bent by a little bit. This then results in the spring bar part exerting a force on the corresponding bracket hook part. The bracket hook part acts to bear or support this force of the spring bar part.

The spring hinge part is often positioned at one end of the metal wire spring for easy design.

The bracket often comprises plastic material, which is readily available.

The metal wire spring often includes a user spring handle part. A user can use the user spring handle part to rotate the metal wire spring about or around the bracket holder part.

In one implementation, the bracket includes two bracket holder parts while the metal wire spring comprises two spring hinge parts that correspond with the two bracket holder parts.

The bracket can include two bracket hook parts while the metal wire spring can include two spring bar parts, which correspond to the two bracket hook parts.

The bracket often includes two or more bracket latch parts while the metal wire spring includes two or more spring latch parts, which correspond to the bracket latch parts.

The application provides an improved combination of a vehicle sensor case and the above-mentioned bracket unit. The vehicle sensor case is fastened onto the bracket unit.

The vehicle sensor case can include a camera unit case, although can it can also include other types of sensor case.

The application provides an improved vehicle. The vehicle includes a combination of a vehicle sensor case and the above-mentioned bracket unit. The bracket unit is fastened onto the vehicle sensor case and it is also fastened onto an interior part of the vehicle.

The application provides an improved method for a bracket unit to fasten onto a vehicle sensor. The bracket unit includes a bracket and a metal wire spring.

The method includes a vehicle sensor receiving step and a vehicle sensor fastening step.

The vehicle sensor receiving step comprises a step of positioning at least one spring bar part of the metal wire spring between at least one corresponding bracket hook part and a bracket plate of the bracket unit. This done such that at least one corresponding spring latch part of the metal wire spring and at least one corresponding bracket latch part of the bracket unit are positioned for receiving at least one corresponding projection of the vehicle sensor. The metal wire spring is then positioned in a relaxed or uncompressed state.

The vehicle sensor fastening step comprises a step of the at least one spring latch part and the at least one corresponding bracket latch part fastening onto the at least one corresponding projection of the vehicle sensor. In effect, the vehicle sensor is fastened onto the spring latch part and onto the bracket latch part. The metal wire spring is then positioned in an urged or compressed state.
- Fig. 1: illustrates a perspective view of a bracket unit,
- Fig. 2: illustrates a side cross-sectional view of the bracket unit of Fig. 1,
- Fig. 3: illustrates a perspective view of a metal wire spring of the bracket unit of Fig. 1,
- Fig. 4: illustrates a perspective view of the camera for fastening onto the bracket unit of Fig. 1,
- Fig. 5: illustrates a side view of the camera of Fig. 4,
- Fig. 6: illustrates a perspective view of a first position of the camera of Figs. 4 and 5 while the bracket unit of Fig. 1 is positioned in a camera receiving position,
- Fig. 7: illustrates a side cross-sectional view of the camera and the bracket unit of Fig. 6,
- Fig. 8: illustrates a perspective view of a second position of the camera of Figs. 4 and 5 while the bracket unit of Fig. 1 is positioned in the camera receiving position,
- Fig. 9: illustrates a side cross-sectional view of the camera and the bracket unit of Fig. 8,
- Fig. 10: illustrates a perspective view of a camera that is fastened onto the bracket unit of Fig. 1 while the bracket unit of Fig. 1 is positioned in a camera fastening position,
- Fig. 11: illustrates a side cross-sectional view of the camera and the bracket unit of Fig. 10, and

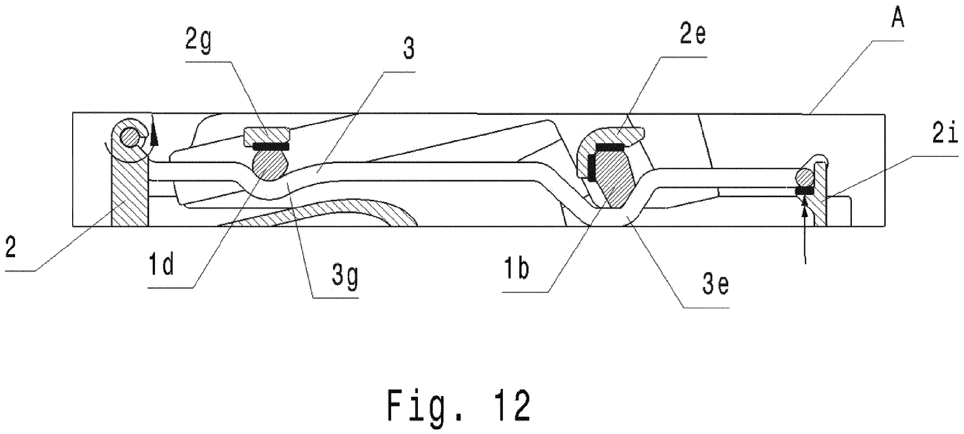

- Fig. 12: illustrates an expanded view of a part of the side cross-sectional view of Fig. 11.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

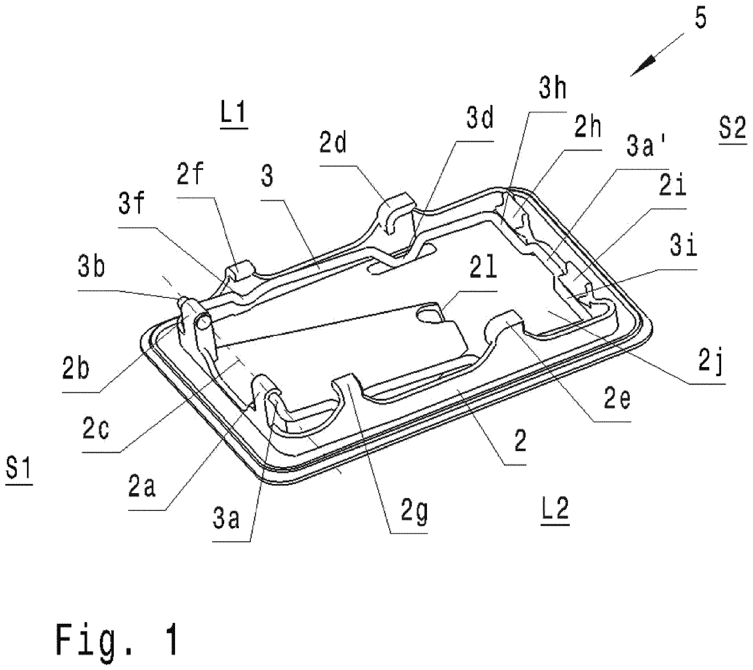

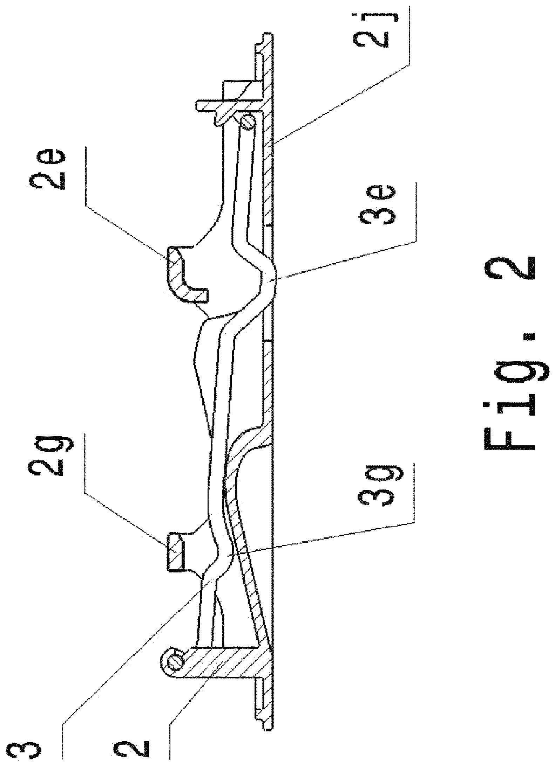

Figs. 1 and 2 show a bracket unit 5 for fastening onto a vehicle camera.

The bracket unit 5 includes a plastic bracket 2 with a metal wire spring 3. The bracket 2 is intended for attaching to an interior part of a vehicle, which is not shown in Figs. 1 and 2.

The bracket 2 and the wire spring 3 include features for holding and fastening onto external projections of a vehicle camera. The features of the bracket 2 correspond to the features of the wire spring 3.

Referring to the bracket 2, it includes a bracket plate 2j with an essentially rectangular shape. The bracket plate 2j has two parallel major surfaces. Several projections extend from one major surface while the other major surface is intended for attaching to an interior part of a vehicle. Moreover, the bracket 2j includes a lens opening 21.

These projections are placed on an outer region or rim of the major surface and are placed near to an edge of the major surface. The projections include two bracket wire-holder parts 2a and 2b, four bracket latch parts 2d, 2e, 2f, and 2g, as well as two bracket hook parts 2h and 2i.

The rectangular plate bracket 2j has two opposite long sides L1 and L2 and two opposite short sides S1 and S2.

In detail, the bracket latch parts 2d and 2f are located on the first long side L1 while the bracket latch parts 2e and 2g are located on the second long side L2. The bracket latch part 2d is located opposite to the bracket latch part 2e while the bracket latch part 2f is located opposite to the bracket latch part 2g.

The bracket wire-holder parts 2a and 2b are located on the first short side S1. The bracket wire-holder parts 2a and 2b have bores or hole, which are aligned to an axis 2c. The bracket hook parts 2h and 2i are located the second short side S2.

The bracket wire-holder part 2b is located opposite to the bracket hook part 2h while the bracket wire-holder part 2a is located opposite to the bracket hook part 2i.

The plastic bracket 2 is produced using a plastic injection-moulding method.

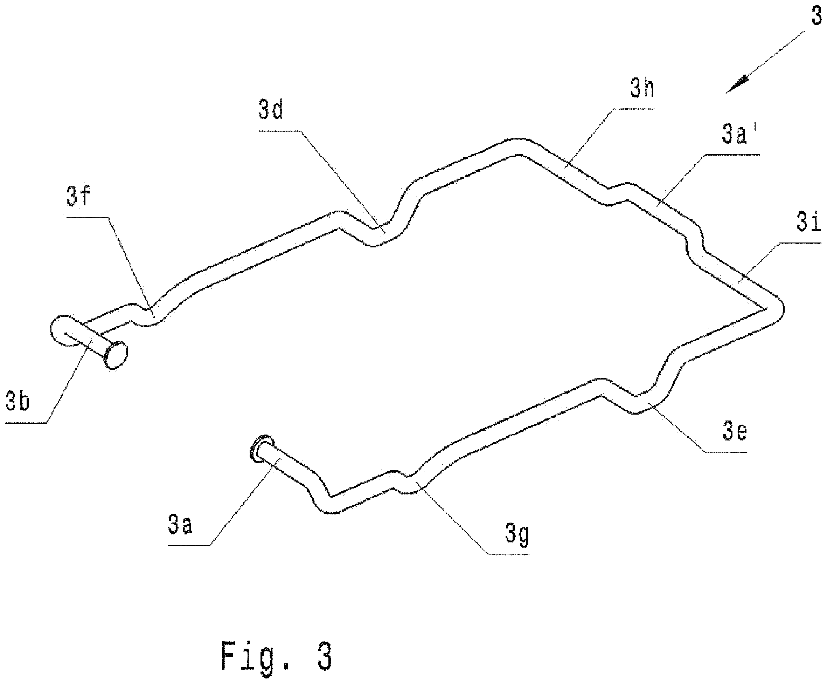

As seen in Fig. 3, the wire spring 3 includes an elongated body with an essentially circular cross-section. In short, the wire spring 3 has a shape of a long rod, which conforms mainly to the outer periphery of the bracket 2 along the sides L1, S2, and L2.

The wire spring 3 has several integrally connected portions. These portions comprise two spring end parts 3a and 3b, four spring latch parts 3d, 3e, 3f, and 3g, two spring bar parts 3h and 3i, and one spring handle part 3a'.

The spring end parts 3a and 3b are placed at two end portions of the wire spring 3. The spring end part 3a is integrally connected to the spring latch part 3g, which is integrally connected to the spring latch part 3e. The spring latch part 3e is integrally connected to the spring bar part 3i, which is integrally connected to the spring handle part 3a'. The spring handle part 3a' is integrally connected to the spring bar part 3h. The spring bar part 3h is integrally connected to the spring latch part 3d. The spring latch part 3d is integrally connected to the spring latch part 3f. The spring latch part 3f is integrally connected to the end part 3b.

The wire spring 3 is bent to form a shape of a part of a rectangle with two opposite long sides and two opposite short sides. The spring latch parts 3d and 3f are located on one long side of the rectangle while the spring latch parts 3e and 3g are located on another long side of the rectangle. The spring end parts 3a and 3b are located on one short side of the rectangle while the spring bar parts 3h and 3i are located another opposite second short side of the rectangle.

The spring bar parts 3h and 3i are adapted to correspond with the respective bracket hook parts 2h and 2i of the bracket 2. The spring latch parts 3d, 3e, 3f, and 3g are adapted to correspond to the respective bracket latch parts 2d, 2e, 2f, and 2g of the bracket 2, as seen in Fig. 1.

The metal wire spring 3 is produced using a metal extrusion process. The circular cross-section of the metal wire spring 3 allows the use of the metal extrusion process, which is often readily available. This is different from production of a plate wire spring, which requires special and costly tooling.

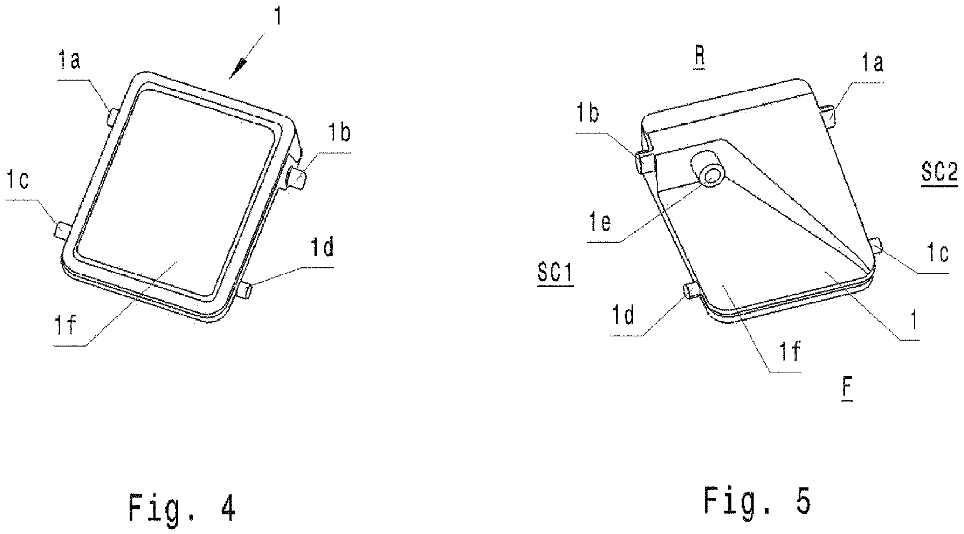

Figs. 4 and 5 show a vehicle camera 1 that is fastened onto the bracket unit 5.

The camera 1 includes a mainly rectangular case 1f with two essentially rectangular projections 1a and 1b and with two essentially cylindrical projections 1c and 1d. The projections 1a, 1b, 1c, and 1d are positioned on an external surface of the rectangular case 1f.

The camera projections 1b and 1d are located on a first long side SC1 of the rectangular case 1f. The camera projections 1a and 1c are located on a second long side SC2 of the rectangular case 1f, wherein the second long side SC2 is positioned opposite to the first long side SC1. The camera projection 1a is placed opposite to the camera projection 1b while the camera projection 1c is placed opposite to the camera projection 1d.

The camera 1 also comprises an objective lens 1e, which is intended for facing towards a front short side F of the rectangular case 1f. The camera 1 is intended for being directed at a driving or moving direction of the vehicle.

In use, the bracket unit 5 is intended for attaching to an interior part of a vehicle. The bracket unit 5 is also used to receive the camera 1 and to fasten onto the camera 1 such that the camera 1 is fixed with respect to the bracket unit 5.

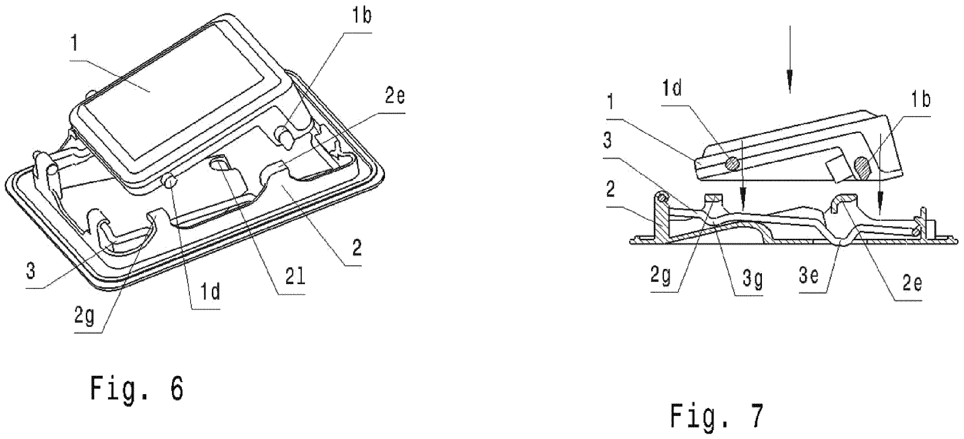

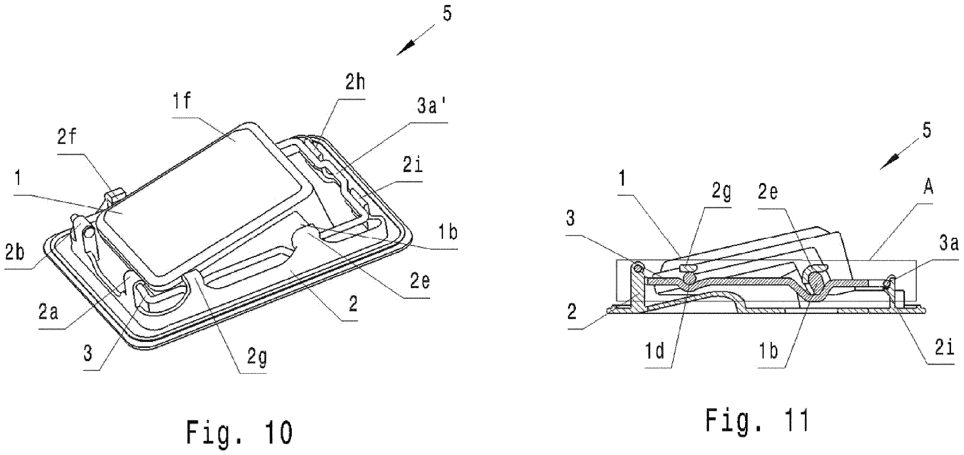

The bracket unit 5 provides an assembled position, which is shown in Figs. 1 and 2, a camera receiving position, which is shown in Figs. 6, 7, 8 and 9, and a camera fastening position, which is shown in Figs. 10 and 11.

In the assembled position, the spring end parts 3a and 3b are inserted into the corresponding bracket wire-holder parts 2a and 2b. This insertion allows the wire spring 3 to rotate about or around the axis 2c. The spring end parts 3a and 3b are then rotatably connected to the corresponding bracket wire-holder parts 2a and 2b while the wire spring 3 is also positioned in a relaxed state. The relaxed state is also called an uncompressed state.

The spring handle part 3a' is adapted for allowing a user to hold in order to rotate easily the wire spring 3 about the axis 2c. The user can rotate and position the wire spring 3 at different angular positions with respect to the bracket 2.

The user can rotate the wire spring 3 about the axis 2c such that the bracket unit 5 is positioned in the camera receiving position.

In the camera receiving position, the bracket 2 and the corresponding metal wire spring 2 are positioned for receiving the camera 1.

The wire spring 3 is rotated about the axis 2c such that the spring bar part 3h is positioned between the respective bracket hook part 2h and the bracket plate 2j and such that the spring bar part 3i is positioned between the respective bracket hook part 2i and the bracket plate 2j.

In this position, the bracket hook parts 2h and 2i block movements of the spring bar parts 3h and 3i such that the wire spring 3 can rotate only a few degrees about the axis 2c. The wire spring 3 is placed in the relaxed state.

The bracket latch part 2d and the spring latch part 3d are positioned for receiving and enclosing the camera projection 1a.

The spring latch part 3d has a curved portion with a recess. The wire spring 3 can flex or bend by a small amount to allow the recess of the curve portion to receive the camera projection 1c and to enclose the camera projection 1a.

Similarly, the bracket latch part 2e and the spring latch part 3e are positioned for receiving and enclosing the camera projection 1b. The bracket latch part 2f and the spring latch part 3f are then positioned for receiving and enclosing the camera projection 1c. The bracket latch part 2g and the spring latch part 3g are positioned for receiving and enclosing the camera projection 1d.

Furthermore, the bracket latch parts 2d and 2e have respective blocking portions for the stopping the camera projections 1a and 1b such that the camera 1 is placed in a predetermined fastening position for fixing to the bracket 2.

The bracket unit 5 can afterward be placed in the camera fastening position.

In the camera fastening position, the camera 1 is inserted in the bracket unit 5 such that the camera 1 is fastened onto the bracket unit 5 by snap fit. The snap fit refers to a connection in which one part of the metal wire spring 3 is bent by a small amount for a short time.

In particular, the camera 1 is placed in the vicinity of the bracket unit 5, as shown in Figs. 6 and 7.

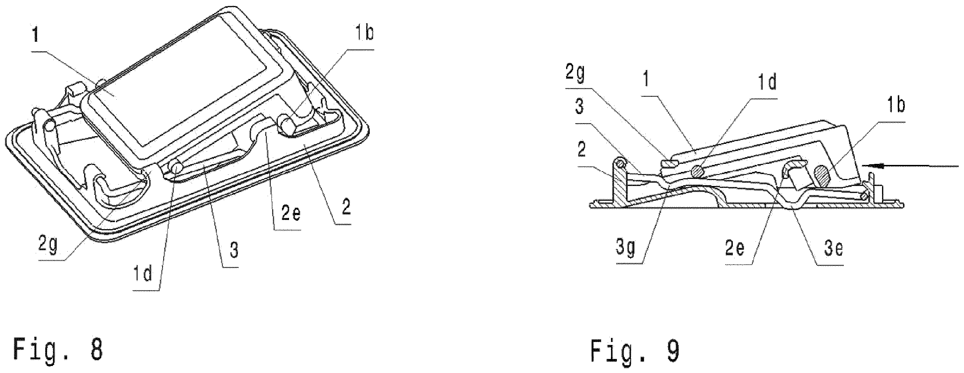

After this, the camera 1 is placed next to the bracket unit 5, as shown in Figs. 8 and 9.

The camera projection 1a is placed in the vicinity of the bracket latch part 2d and the corresponding spring latch part 3d. Similarly, the camera projection 1b is placed in the vicinity of the bracket latch part 2e and the corresponding spring latch part 3e. The camera projection 1c is placed in the vicinity of the bracket latch part 2f and the corresponding spring latch part 3f. The camera projection 1d is placed in the vicinity of the bracket latch part 2g and the corresponding spring latch part 3g.

The camera 1 is later inserted in the bracket unit 5, as shown in Figs. 10 and 11. The camera 1 is pushed towards the bracket wire-holder parts 2a and 2b.

The inserting also causes the spring latch parts 3d, 3e, 3f, and 3g to move away from the corresponding the bracket latch parts 2d, 2e, 2f, and 2g.

The metal wire spring 3 also flex and bend by a small amount in which receive and enclose the respective projections 1a, 1b, 1c, and 1d of the camera 1.

This then places the wire spring 3 in an urged state. The urged state is also called a compressed state.

Moreover, the bracket hook parts 2h and 2i support a force of the spring bar parts 3h and 3i, wherein the force is directed towards the bracket plate 2j.

This supporting also causes the bracket latch parts 2d, 2e, 2f, and 2g and the corresponding spring latch parts 3d, 3e, 3f, and 3g to fasten onto the respective projections 1a, 1b, 1c, and 1d of the camera 1. In effect, the bracket unit 5 is then fastened onto the camera 1.

In the camera fastening position, the camera lens 1 is also aligned with the bracket lens opening 21 such that light rays from objects that are positioned in front of the camera 1 can reach the camera lens 1e.

Later on, if needed, the camera 1 can also be removed from the bracket 2 for maintenance or other purpose, wherein the wire spring 3 is placed in the relaxed state. This then places the bracket unit 5 in the camera receiving position.

A method of using the bracket unit 5 is described below.

The method comprises a bracket assembly step, a camera receiving step, a camera fastening step, and a camera removal step.

Referring to the assembly step, a production worker inserts the spring end parts 3a and 3b of the wire spring 3 into the corresponding bracket wire-holder parts 2a and 2b of the bracket 2, thereby positioning the bracket unit 5 in the bracket assembled position.

After this, the camera receiving step can be performed.

Referring to the camera receiving step, a user places the bracket unit 5 in the camera receiving position. The user holds the spring handle part 3a' and then rotates the wire spring 3 about the axis 2c such that the spring bar part 3h is positioned between the respective bracket hook part 2h and the bracket plate 2j and such that the spring bar part 3i is positioned between the respective bracket hook part 2i and the bracket plate 2j.

Thereafter, the camera fastening step can be performed.

Referring to the camera fastening step, the user places the bracket unit 5 in the camera fastening position. The user inserts the camera 1 into the bracket unit 5. The user can push the camera 1 towards the side S1 of the bracket 2 while holding the bracket 2. This then causes the projections 1a, 1b, 1c, and 1d of the camera 1 to engage with the bracket latch parts 2d, 2e, 2f, and 2g and the corresponding spring latch parts 3d, 3e, 3f, and 3g of the bracket unit 2. The camera 1 then is fastened onto the bracket unit 5.

Later on, the camera removal step can be performed.

Referring to the camera removal step, the user removes the camera 1 from the bracket unit 5. Put differently, the user pulls the camera 1 away from the bracket unit 5. The bracket unit 5 is then positioned in the camera receiving position.

The embodiment can be applied to a bracket to mount and fasten any camera onto the windshield of the car.

In a general sense, other types of vehicle sensors, such as a rain sensor, can replace the vehicle camera. In other words, the bracket 2 can be used to fasten onto different type of vehicle sensors.

The bracket unit 5 provides several benefits.

The metal material of the wire spring 3 allows properties of the wire spring 3, such as elasticity, to remain essentially unchanged over a long period of time, even at high temperatures in a vehicle. The elasticity property allows the wire spring 3 to restore its original shape after the spring 3 is stretched. In effect, the wire spring 3 can be used for a long time, even at high temperatures. In other words, the bracket unit 5 can align to align the camera 1 and can fastened onto the camera 1 over a long period of time and is able to function at high temperatures.

Manufacturing of the metal wire 3 does not require complex tools and can be produced using technology to bend metal wires and pipes.

The design of the bracket unit 5 is simple and requires only assembly of two parts, namely a plastic bracket and a metal wire spring.

In a special embodiment, the spring bar parts 3h and 3i are fastened onto the corresponding bracket hook parts 2h and 2i by respective hook snap joints. The wire spring 3 is then placed in a camera receiving urged state.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

### REFERENCE NUMBERS

- 1: camera
- 1a: projection
- 1b: projection
- 1c: projection
- 1d: projection
- 1e: lens
- 1f: case
- 2: bracket
- 2a: bracket wire-holder part
- 2b: bracket wire-holder part
- 2c: axis
- 2d: bracket latch part
- 2e: bracket latch part
- 2f: bracket latch part
- 2g: bracket latch part
- 2h: bracket hook part
- 2i: bracket hook part
- 2j: bracket plate
- 21: lens opening
- 3: wire spring
- 3a': spring handle part
- 3a: spring end part
- 3b: spring end part
- 3d: spring latch part
- 3e: spring latch part
- 3f: spring latch part
- 3g: spring latch part
- 3h: spring bar part
- 3i: spring bar part
- 5: bracket unit

- F: front side
- R: rear side
- L1: first long side
- L2: second long side
- S1: first short side
- S2: second short side
- SC1: first side
- SC2: second side

## Claims

1. A bracket unit (5) for holding a vehicle sensor, the bracket unit (5) comprising a bracket (2) and a metal wire spring,
the bracket (2) comprising
- a bracket plate (2j),
- at least one bracket holder part (2a, 2b),
- at least one bracket hook part (2h, 2i), and
- at least one bracket latch part (2d, 2e, 2f, 2g), wherein the at least one bracket holder part (2a, 2b), the at least one bracket hook part (2h, 2i), and the at least one bracket latch part (2d, 2e, 2f, 2g) being integrally connected to one side of the bracket plate (2j),
the metal wire spring (3) comprising an elongated body with an essentially circular cross-section, the body comprising
- at least one spring hinge part, the spring hinge part being rotatably attached to the bracket holder part (2a, 2b),
- at least one spring bar part (3h, 3i), and
- at least one spring latch part (3d, 3e, 3f, 3g),
wherein the bracket unit (5) provides a vehicle sensor receiving position and a vehicle sensor fastening position,
- in the vehicle sensor receiving position, the spring bar part (3h, 3i) is positioned between the bracket hook part (2h, 2i) and the bracket plate (2j) such that the spring latch part (3d, 3e, 3f, 3g) and the bracket latch part (2d, 2e, 2f, 2g) are positioned for receiving the vehicle sensor, wherein the metal wire spring (3) is positioned in a relaxed state, and
- in the vehicle sensor fastening position, the spring latch part (3d, 3e, 3f, 3g) and the bracket latch part (2d, 2e, 2f, 2g) are fastened onto the vehicle sensor, wherein the metal wire spring (3) is positioned in an urged state.

2. The bracket unit (5) according to claim 1, wherein,
in the vehicle sensor fastening position, the bracket hook part (2h, 2i) is positioned between the spring bar part (3h, 3i) and the bracket plate (2j) such that the bracket hook part (2h, 2i) bear a force of the spring bar part (3h, 3i).

3. The bracket unit (5) according to claim 1 or 2, wherein the spring hinge part is positioned at one end (3a, 3b) of the metal wire spring (3).

4. The bracket unit (5) according to one of the above-mentioned claims, wherein
the bracket (2) comprises plastic material.

5. The bracket unit (5) according to one of the above-mentioned claims, wherein
the metal wire spring (3) comprises a user spring handle part (3a') for allowing a user to rotate the metal wire spring (3) about the bracket holder part (2a, 2b).

6. The bracket unit (5) according to one of the above-mentioned claims, wherein
the bracket (2) comprises two bracket holder parts (2a, 2b) and the metal wire spring comprises two corresponding spring hinge parts.

7. The bracket unit (5) according to one of the above-mentioned claims, wherein
the bracket (2) comprises two bracket hook parts (2h, 2i) and the metal wire spring comprises two corresponding spring bar parts (3h, 3i).

8. The bracket unit (5) according to one of the above-mentioned claims, wherein
the bracket comprises at least two bracket latch parts (2d, 2e, 2f, 2g) and the metal wire spring comprises at least two corresponding spring latch parts (3d, 3e, 3f, 3g) .

9. A combination of a vehicle sensor case and a bracket unit (5) according to one of the above-mentioned claims, wherein the vehicle sensor case is fastened onto the bracket unit (5).

10. The combination according to claim 9, wherein
the vehicle sensor case comprises a camera unit case (1f).

11. A vehicle comprising
a combination of a vehicle sensor case and a bracket unit (5) according to claim 9 or 10,
wherein the bracket unit (5) is fastened onto the vehicle sensor case and the bracket unit (5) is fastened onto an interior part of the vehicle.

12. A method for a bracket unit (5) to fasten onto a vehicle sensor, the bracket unit comprising a bracket (2) and a metal wire spring (3), the method comprising
a vehicle sensor receiving step and a vehicle sensor fastening step,
wherein
- the vehicle sensor receiving step comprises positioning at least one spring bar part (3h, 3i) of the metal wire spring (3) between at least one bracket hook part (2h, 2i) and a bracket plate (2j) of the bracket unit (5) such that at least one spring latch part (3d, 3e, 3f, 3g) of the metal wire spring (3) and at least one bracket latch part (2d, 2e, 2f, 2g) of the bracket unit (5) are positioned for receiving the vehicle sensor, wherein the metal wire spring (3) is positioned in a relaxed state,
- the vehicle sensor fastening step comprises the at least one spring latch part (3d, 3e, 3f, 3g) and the at least one bracket latch part (2e, 2f, 2g, 2h) fastening onto the vehicle sensor, wherein the metal wire spring (3) is positioned in an urged state.

## Patentansprüche

1. Halterungseinheit (5) zum Halten eines Fahrzeugsensors, wobei die Halterungseinheit (5) eine Halterung (2) und eine Metalldrahtfeder umfasst,
die Halterung (2) umfassend:
- eine Halterungsplatte (2j),
- wenigstens einen Halterungshalterteil (2a, 2b),
- wenigstens einen Halterungshakenteil (2h, 2i) und
- wenigstens einen Halterungsrastteil (2d, 2e, 2f, 2g), wobei der wenigstens eine Halterungshalterteil (2a, 2b), der wenigstens eine Halterungshakenteil (2h, 2i) und der wenigstens eine Halterungsrastteil (2d, 2e, 2f, 2g) einstückig mit einer Seite der Halterungsplatte (2j) verbunden sind,
die Metalldrahtfeder (3) einen langgestreckten Körper mit einem im Wesentlichen kreisförmigen Querschnitt umfasst, der Körper umfassend:
- wenigstens einen Federanlenkteil, wobei der Federanlenkteil drehbar am Halterungshalterteil (2a, 2b) angebracht ist,
- wenigstens einen Federstegteil (3h, 3i) und
- wenigstens einen Federrastteil (3d, 3e, 3f, 3g),
wobei die Halterungseinheit (5) eine Fahrzeugsensoraufnahmestellung und eine Fahrzeugsensorbefestigungsstellung bereitstellt,
- in der Fahrzeugsensoraufnahmestellung ist der Federstegteil (3h, 3i) so zwischen dem Halterungshakenteil (2h, 2i) und der Halterungsplatte (2j) positioniert, dass der Federrastteil (3d, 3e, 3f, 3g) und der Halterungsrastteil (2d, 2e, 2f, 2g) zur Aufnahme des Fahrzeugsensors positioniert sind, wobei die Metalldrahtfeder (3) in einem entspannten Zustand positioniert ist, und
- in der Fahrzeugsensorbefestigungsstellung sind der Federrastteil (3d, 3e, 3f, 3g) und der Halterungsrastteil (2d, 2e, 2f, 2g) auf dem Fahrzeugsensor befestigt, wobei die Metalldrahtfeder (3) in einem gespannten Zustand positioniert ist.

2. Halterungseinheit (5) nach Anspruch 1, wobei
in der Fahrzeugsensorbefestigungsstellung der Halterungshakenteil (2h, 2i) so zwischen dem Federstegteil (3h, 3i) und der Halterungsplatte (2j) positioniert ist, dass der Halterungshakenteil (2h, 2i) eine Kraft des Federstegteils (3h, 3i) trägt.

3. Halterungseinheit (5) nach Anspruch 1 oder 2, wobei der Federanlenkteil an einem Ende (3a, 3b) der Metalldrahtfeder (3) positioniert ist.

4. Halterungseinheit (5) nach einem der oben erwähnten Ansprüche, wobei
die Halterung (2) Kunststoff umfasst.

5. Halterungseinheit (5) nach einem der oben erwähnten Ansprüche, wobei
die Metalldrahtfeder (3) einen Benutzerfedergriffteil (3a') umfasst, damit ein Benutzer die Metalldrahtfeder (3) um den Halterungshalterteil (2a, 2b) drehen kann.

6. Halterungseinheit (5) nach einem der oben erwähnten Ansprüche, wobei
die Halterung (2) zwei Halterungshalterteile (2a, 2b) umfasst und die Metalldrahtfeder zwei entsprechende Federanlenkteile umfasst.

7. Halterungseinheit (5) nach einem der oben erwähnten Ansprüche, wobei
die Halterung (2) zwei Halterungshakenteile (2h, 2i) umfasst und die Metalldrahtfeder zwei entsprechende Federstegteile (3h, 3i) umfasst.

8. Halterungseinheit (5) nach einem der oben erwähnten Ansprüche, wobei
die Halterung wenigstens zwei Halterungsrastteile (2d, 2e, 2f, 2g) umfasst und die Metalldrahtfeder wenigstens zwei entsprechende Federrastteile (3d, 3e, 3f, 3g) umfasst.

9. Kombination aus einem Fahrzeugsensorgehäuse und einer Halterungseinheit (5) nach einem der oben erwähnten Ansprüche, wobei das Fahrzeugsensorgehäuse auf der Halterungseinheit (5) befestigt ist.

10. Kombination nach Anspruch 9, wobei
das Fahrzeugsensorgehäuse ein Kameraeinheitsgehäuse (1f) umfasst.

11. Fahrzeug, umfassend eine Kombination aus einem Fahrzeugsensorgehäuse und einer Halterungseinheit (5) nach Anspruch 9 oder 10,
wobei die Halterungseinheit (5) auf dem Fahrzeugsensorgehäuse befestigt ist und die Halterungseinheit (5) auf einem im Inneren befindlichen Teil des Fahrzeugs befestigt ist.

12. Verfahren zur Befestigung einer Halterungseinheit (5) auf einem Fahrzeugsensor, wobei die Halterungseinheit eine Halterung (2) und eine Metalldrahtfeder (3) umfasst, das Verfahren umfassend:
einen Fahrzeugsensoraufnahmeschritt und einen
Fahrzeugsensorbefestigungsschritt,
wobei
- der Fahrzeugsensoraufnahmeschritt das Positionieren wenigstens eines Federstegteils (3h, 3i) der Metalldrahtfeder (3) zwischen wenigstens einem Halterungshakenteil (2h, 2i) und einer Halterungsplatte (2j) der Halterungseinheit (5), so dass wenigstens ein Federrastteil (3d, 3e, 3f, 3g) der Metalldrahtfeder (3) und wenigstens ein Halterungsrastteil (2d, 2e, 2f, 2g) der Halterungseinheit (5) zur Aufnahme des Fahrzeugsensors positioniert sind, umfasst , wobei die Metalldrahtfeder (3) in einem entspannten Zustand positioniert ist,
- der Fahrzeugsensorbefestigungsschritt das Befestigtwerden des wenigstens einen Federrastteils (3d, 3e, 3f, 3g) und des wenigstens einen Halterungsrastteils (2e, 2f, 2g, 2h) auf dem Fahrzeugsensor umfasst, wobei die Metalldrahtfeder (3) in einem gespannten Zustand positioniert ist.

## Revendications

1. Unité support (5) pour maintenir un capteur de véhicule, l'unité support (5) comprenant un support (2) et un ressort en fil métallique,
le support (2) comprenant
- une plaque de support (2j),
- au moins une pièce de fixation de support (2a, 2b),
- au moins une pièce de crochet de support (2h, 2i), et
- au moins une pièce de verrou de support (2d, 2e, 2f, 2g), l'au moins une pièce de fixation de support (2a, 2b), l'au moins une pièce de crochet de support (2h, 2i) et l'au moins une pièce de verrou de support (2d, 2e, 2f, 2g) étant reliées d'un seul tenant à un côté de la plaque de support (2j),
le ressort en fil métallique (3) comprenant un corps allongé avec une section essentiellement circulaire, le corps comprenant
- au moins une pièce de charnière à ressort, la charnière à ressort étant attachée de façon pivotante à la pièce de fixation de support (2a, 2b),
- au moins une pièce de barre à ressort (3h, 3i), et
- au moins une pièce de verrou à ressort (3d, 3e, 3f, 3g),
l'unité support (5) fournissant une position de réception de capteur de véhicule et une position de fixation de capteur de véhicule,
- dans la position de réception de capteur de véhicule, la pièce de barre à ressort (3h, 3i) étant positionnée entre la pièce de crochet de support (2h, 2i) et la plaque de support (2j) de telle sorte que la pièce de verrou à ressort (3d, 3e, 3f, 3g) et la pièce de verrou de support (2d, 2e, 2f, 2g) sont positionnées pour recevoir le capteur de véhicule, le ressort en fil métallique (3) étant positionné en un état de détente, et
- dans la position de fixation de capteur de véhicule, la pièce de verrou à ressort (3d, 3e, 3f, 3g) et la pièce de verrou de support (2d, 2e, 2f, 2g) étant fixées sur le capteur de véhicule, le ressort en fil métallique (3) étant positionné dans un état de tension.

2. Unité support (5) selon la revendication 1,
la pièce de crochet de support (2h, 2i) étant positionnée entre la pièce de barre à ressort (3h, 3i) et la plaque de support (2j), de telle sorte que la pièce de crochet de support (2h, 2i) supporte une force de la pièce de barre à ressort (3h, 3i), dans la position de fixation de capteur de véhicule.

3. Unité support (5) selon la revendication 1 ou 2,
la pièce de charnière à ressort étant positionnée à une extrémité (3a, 3b) du ressort en fil métallique (3).

4. Unité support (5) selon l'une des revendications précédentes,
le support (2) comprenant un matériau en plastique.

5. Unité support (5) selon l'une des revendications précédentes,
le ressort en fil métallique (3) comprenant une pièce de poignée de ressort d'utilisateur (3a') pour permettre à un utilisateur de faire pivoter le ressort en fil métallique (3) sur la pièce de fixation de support (2a, 2b).

6. Unité support (5) selon l'une des revendications précédentes,
le support (2) comprenant deux pièces de fixation de support (2a, 2b) et le ressort en fil métallique comprenant deux pièces de charnière à ressort correspondantes.

7. Unité support (5) selon l'une des revendications précédentes,
le support (2) comprenant deux pièces de crochet de support (2h, 2i) et le ressort en fil métallique comprenant deux pièces de barre à ressort (3h, 3i) correspondantes.

8. Unité support (5) selon l'une des revendications précédentes,
le support comprenant au moins deux pièces de verrou de support (2d, 2e, 2f, 2g) et le ressort en fil métallique comprenant au moins deux pièces de verrou à ressort (3d, 3e, 3f, 3g).

9. Combinaison d'un boîtier de capteur de véhicule et d'une unité support (5) selon l'une des revendications précédentes,
le boîtier de capteur de véhicule étant fixé sur l'unité support (5).

10. Combinaison selon la revendication 9,
le boîtier de capteur de véhicule comprenant un boîtier d'unité de caméra (1f).

11. Véhicule comprenant
une combinaison d'un boîtier de capteur de véhicule et d'une unité support (5) selon la revendication 9 ou 10,
l'unité support (5) étant fixée sur le boîtier de capteur de véhicule et l'unité support (5) étant fixée sur une pièce de l'intérieur du véhicule.

12. Procédé de fixation d'une unité support (5) sur un capteur de véhicule, l'unité support comprenant un support (2) et un ressort en fil métallique (3), le procédé comprenant
une étape de réception de capteur de véhicule et une étape de fixation de capteur de véhicule,
- l'étape de réception de capteur de véhicule comprenant positionner au moins une pièce de barre à ressort (3h, 3i) du ressort en fil métallique (3) entre au moins une pièce de crochet de support (2h, 2i) et une plaque de support (2j) de l'unité support (5) de telle sorte qu'au moins une pièce de verrou à ressort (3d, 3e, 3f, 3g) du ressort en fil métallique (3) et au moins une pièce de verrou de support (2d, 2e, 2f, 2g) de l'unité support (5) sont positionnées pour recevoir le capteur de véhicule, le ressort en fil métallique (3) étant positionné dans un état de détente,
- l'étape de fixation de capteur de véhicule comprenant la fixation de l'au moins une pièce de verrou à ressort (3d, 3e, 3f, 3g) et de l'au moins une pièce de verrou de support (2e, 2f, 2g, 2h) sur le capteur de véhicule, le ressort en fil métallique (3) étant positionné dans un état de tension.
